(19) Europäisches Patentamt
European Patent Office
Office européen des brevets

(11) **EP 4 697 606 A1**

(12) **EUROPEAN PATENT APPLICATION**

(43) Date of publication:
**18.02.2026 Bulletin 2026/08**

(21) Application number: **24210608.6**

(22) Date of filing: **04.11.2024**

(51) International Patent Classification (IPC):
**H04B 1/04** *(2006.01)* **H04B 7/06** *(2006.01)*

(52) Cooperative Patent Classification (CPC):
**H04B 1/0475; H04B 1/0483; H04B 7/0617;**
H04B 2001/0425

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.08.2024 TW 113130378**
**21.10.2024 US 202418921021**

(71) Applicant: **Industrial Technology Research Institute**
**310401 Hsinchu (TW)**

(72) Inventors:
• **Deng, Juinn-Horng**
**324 Taoyuan City (TW)**
• **Yang, Min-Siou**
**542021 Caotun Township, Nantou County (TW)**
• **Huang, Po-Han**
**310005 Zhudong Township, Hsinchu County (TW)**
• **Yu, Ming Jie**
**307 Qionglin Township, Hsinchu County (TW)**

(74) Representative: **Kurig, Thomas**
**Becker Kurig & Partner**
**Patentanwälte mbB**
**Bavariastraße 7**
**80336 München (DE)**

Remarks:
Amended claims in accordance with Rule 137(2) EPC.

(54) **MIMO PA FULL-ANGLE LINEARIZATION PRE-PROCESSING METHOD AND MIMO FULL-ANGLE LINEARIZATION BEAMFORMING DEVICE USING SAID METHOD**

(57) Disclosed is a multi-input multi-output power amplifier (PA1, PA2) full-angle linearization pre-processing method. A first original signal is input to acquire first signals from power amplifiers (PAs) (PA1, PA2). Initial non-linear characteristics of each PA (PA1, PA2) are acquired based on the first original signal and the first signals. Alignment operations corresponding to target PAs (PA1, PA2) other than a reference PA are executed based on the first signals and the reference PA to acquire alignment parameter sets corresponding to the target PAs (PA1, PA2). The alignment parameter sets are applied to alignment filters (502-50N). A linearization operation is executed to the reference PA through inputting the first original signal into a digital pre-distortion circuit unit (400) in order to acquire a reference DPD parameter set of the DPD circuit unit (400) corresponding to the reference PA. The reference DPD parameter set is applied to the DPD circuit unit (400).

| | |
|---|---|
| Input a first original signal to acquire multiple first signals that are output from multiple PA | S310 |
| Acquire initial non-linear characteristics of each of the multiple PA based on the first original signal and the multiple first signals | S320 |
| Execute multiple alignment operations that correspond to multiple target PA other than a reference PA based on the multiple first signals and the reference PA among the multiple PA to acquire multiple alignment parameter sets that respectively correspond to the multiple target PA | S330 |
| Apply the multiple alignment parameter sets to multiple alignment filters that correspond to the multiple target PA | S340 |
| Execute a linearization operation to the reference PA through inputting the first original signal to a digital pre-distortion (DPD) circuit unit in order to acquire a reference DPD parameter set of the DPD circuit unit that corresponds to the reference PA | S350 |
| Apply the reference DPD parameter set to the DPD circuit unit | S360 |

**FIG. 3A**

# EP 4 697 606 A1

**Description**

TECHNICAL FIELD

The disclosure relates to a pre-processing method of beamforming technology and a beamforming device using the method.

BACKGROUND

In the modern wireless communication system, multi-input multi-output (MIMO) technology and the application of millimeter wave frequency bands are increasingly important, especially playing a main role in the development of 5G and future 6G systems. However, as the communication system develops toward high frequency, broadband and high power, the non-linear distortion problem of a power amplifier (PA) becomes more serious. This does not only affect the spectral efficiency of the system but also reduce the communication quality.

The traditional digital pre-distortion (DPD) technology has been quite mature in the linearization processing of a single PA, but new challenges are faced in a MIMO system. First, the characteristics difference between multiple PAs in a MIMO system makes it difficult for a single DPD to simultaneously optimize the performance of all PA. Secondly, in a broadband application, the response difference of different PA under different frequencies is even more obvious. The difficulty of linearization is further increased. In addition, the beamforming characteristics of a MIMO system require good linearity to be maintained in different directions. This proposes higher requirements for the traditional DPD technology.

SUMMARY

Exemplary embodiments of the disclosure provide a new MIMO PA full-angle linearization pre-processing method and a MIMO full-angle linearization beamforming device using the method. The foregoing technical problem may be solved. The linear consistency and performance of a MIMO system in broadband, full-angle range and high power are improved.

At least one of the embodiments of the disclosure provides a MIMO PA full-angle linearization pre-processing method for a MIMO beamforming device with multiple PAs that correspond to multiple radio frequency links. The method includes: a first original signal is input to acquire multiple first signals that are output from the multiple PAs; initial non-linear characteristics of each of the multiple PAs are acquired based the first original signal and the multiple first signals; multiple alignment operations that correspond to multiple target PAs other than a reference PA are executed based on the multiple first signals and the reference PA among the multiple PAs to acquire multiple alignment parameter sets that respectively correspond to the multiple target PAs; the multiple alignment parameter sets are applied to multiple alignment filters that correspond to the multiple target PAs; a linearization operation is executed to the reference PA through inputting the first original signal to a digital pre-distortion (DPD) circuit unit in order to acquire a reference DPD parameter set of the DPD circuit unit that corresponds to the reference PA; and the reference DPD parameter set is applied to the DPD circuit unit.

At least one of the embodiments of the disclosure provides a MIMO full-angle linearization beamforming device that includes: multiple PAs that correspond to multiple radio frequency links; multiple alignment filters that correspond to multiple target PAs other than a reference PA among the multiple PAs; multiple pre-equalization filters that correspond to the multiple target PAs; a DPD circuit unit; and a processor that is configured to execute multiple code modules. The multiple code modules include: an alignment module that is configured to execute an alignment operation, in which the processor is electrically connected to the multiple alignment filters to apply multiple alignment parameter sets to the multiple alignment filters, and multiple alignment signals that are output from the multiple alignment filters are input to the multiple pre-equalization filters that are electrically connected with the multiple alignment filters; a pre-equalization module that is configured to execute a pre-equalization operation, in which the processor is electrically connected to the multiple pre-equalization filters to apply multiple pre-equalization parameters to the multiple pre-equalization filters, and multiple pre-equalization signals that are output from the multiple pre-equalization filters are input to the multiple target PAs that are electrically connected with the multiple pre-equalization filters; and a DPD module that is configured to execute a linearization operation, in which the processor is electrically connected to the DPD circuit unit, and a DPD signal that is output from the DPD circuit unit is input to the reference PA and the multiple alignment filters. In addition, the processor is disposed to: input a first original signal to acquire multiple first signals that are output from the multiple PAs; acquire initial non-linear characteristics of each of the multiple PAs based the first original signal and the multiple first signals; execute multiple alignment operations that correspond to the multiple target PAs other than the reference PA based on the multiple first signals and the reference PA among the multiple PAs through the alignment module to acquire the multiple alignment parameter sets that respectively correspond to the multiple target PAs; apply the multiple alignment parameter sets to the multiple alignment filters that correspond to the multiple target PAs; execute the linearization operation to the reference PA through inputting the first original signal to the DPD circuit unit in order to acquire a reference DPD parameter set of the DPD circuit unit that corresponds to the reference PA; and apply the reference DPD parameter set to the DPD circuit unit..

Based on the above, at least one of the embodiments of the disclosure provides a new MIMO PA full-angle linearization pre-processing method and a MIMO full-angle linearization beamforming device using the method. Output signals of the multiple PAs may be acquired through inputting the original signals. The initial non-linear characteristics of every PA are captured. Next, the reference PA is selected, and the alignment operation is executed to the other target PAs. The corresponding alignment parameter sets are acquired and applied to the individual alignment filters. This step effectively unifies the non-linear characteristics of the multiple PAs. Subsequently, the linearization operation is executed for the reference PA. The reference DPD parameter set is acquired and applied to the DPD circuit unit to implement linearization of the radio frequency signals. In this way, in a condition where one DPD circuit unit is required, linearization of the multiple PAs may be implemented within a full-angle range. System complexity and cost are significantly reduced. More importantly, in broadband mode, the disclosure may further execute the pre-equalization operation to solve a non-linear broadband response problem of spread spectrum of synthesized radio frequency signals of the multiple PAs in order to maintain the full-angle linearization effect.

BRIEF DESCRIPTION OF THE DRAWINGS

The accompanying drawings are included to provide a further understanding of the disclosure, and are incorporated in and constitute a part of this specification. The drawings illustrate example embodiments of the disclosure and, together with the description, serve to explain the principles of the disclosure.

FIG. 1A is a block diagram of a MIMO beamforming device according to an embodiment of the disclosure.
FIG. 1B is a block diagram of a MIMO beamforming device according to another embodiment of the disclosure.
FIG. 2 is a schematic diagram of a storage device according to an embodiment of the disclosure.
FIG. 3A is a flow chart of a MIMO PA full-angle linearization pre-processing method according to an embodiment of the disclosure.
FIG. 3B is a flow chart of a MIMO PA full-angle linearization pre-processing method according to another embodiment of the disclosure.
FIG. 4 is a sequence diagram of a MIMO PA full-angle linearization pre-processing method according to an embodiment of the disclosure.
FIG. 5A is a spectrogram corresponding to a radio frequency signal output from a reference PA according to an embodiment of the disclosure.
FIG. 5B is a spectrogram corresponding to a radio frequency signal output from a target PA according to an embodiment of the disclosure.
FIG. 6 is a spectrogram corresponding to a radio frequency signal output from a reference PA after a linearization operation is executed according to an embodiment of the disclosure.
FIG. 7A is a spectrogram corresponding to a radio frequency signal output from a target PA after a DPD parameter corresponding to a reference PA is applied according to an embodiment of the disclosure.
FIG. 7B is a spectrogram corresponding to a radio frequency signal output from a target PA after a DPD parameter corresponding to a reference PA is applied and an alignment operation is executed according to an embodiment of the disclosure.
FIG. 8A is a spectrogram of an added radio frequency signal of a reference PA and a target PA after a DPD parameter corresponding to the reference PA has been applied and an alignment operation has been executed according to an embodiment of the disclosure.
FIG. 8B is a spectrogram of an added radio frequency signal of a reference PA and a target PA after a DPD parameter corresponding to the reference PA has been applied, an alignment operation has been executed, and a pre-equalization operation has been executed according to an embodiment of the disclosure.

DETAILED DESCRIPTION OF DISCLOSED EMBODIMENTS

Reference will now be made in detail to the exemplary embodiments of the disclosure, examples of the embodiments are illustrated in the accompanying drawings. Wherever possible, the same reference numerals are used in the drawings and the description to refer to the same or like elements.

It should be understood that the terms "system" and "network" in the disclosure are often used interchangeably. The term "and/or" in the disclosure only describes the relationship of associated objects. This means that there may be three types of relationship. For example, A and/or B may mean three situations: A exists alone, A and B simultaneously exist, or B exists alone. In addition, the character "/" in the disclosure generally indicates that the associated objects are in an "or" relationship.

A MIMO beamforming device 10 is a main element in the modern wireless communication system, especially playing a core role in the 5G and future 6G network. This device may be disposed in a network device or a user equipment. The capacity, coverage and energy efficiency of the communication system may be significantly improved.

An application scenario of a MIMO beamforming device is, for example: a base station that provides high-speed and high-capacity wireless coverage in urban, suburban and rural areas; a small base station that is configured to enhance network coverage indoors or in high-density regions; a millimeter wave communication that implements high-speed data transmission in high frequency bands (such as 28GHz, 39GHz, etc.); a vehicle to X (V2X) that supports high-speed and low-latency communication between vehicles and infrastructure and between vehicles and other vehicles; an industrial internet of things (IIoT) that provides a reliable wireless connection in a factory environment and supports automation and remote control; a smart city that supports large-scale sensor networks and interconnection between equipment.

Common protocols and standards of a MIMO beamforming device are as follows. 5G NR (New Radio): supports Sub-6 GHz and millimeter wave frequency bands. LTE-Advanced Pro: an enhanced version of the transition from 4G to 5G. Wi-Fi 6 (802.11ax) and Wi-Fi 6E: a high-efficiency wireless LAN. O-RAN (Open Radio Access Network): an open wireless access network standard. 3GPP Release 15, 16, 17: define technical specifications of each stage in 5G.

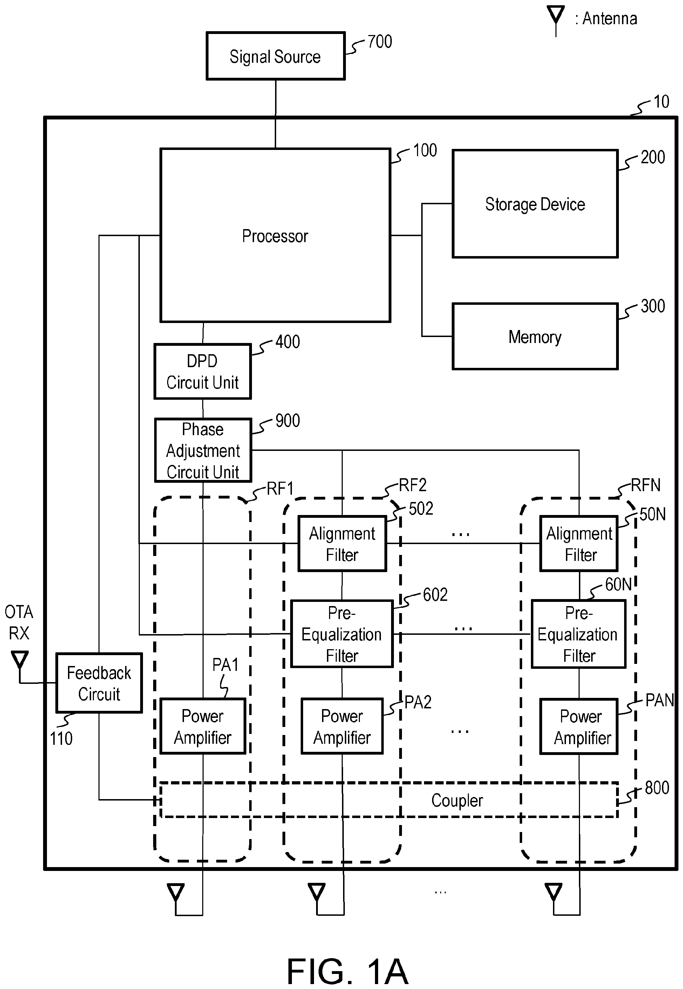

FIG. 1A is a block diagram of a MIMO beamforming device according to an embodiment of the disclosure. In the modern wireless communication system, multi-input multi-output (MIMO) technology plays a main role. A MIMO system significantly improves the capacity and reliability of a communication system through using multiple emitting and receiving antennas. However, the complexity of the MIMO system also brings a series of technical challenges. One of the challenges is the linearization problem of a power amplifier (PA).

Please refer to FIG. 1A. The disclosure proposes an innovative MIMO power amplifier full-angle linearization pre-processing method and a MIMO beamforming device 10 using the method. The MIMO beamforming device 10 includes: a processor 100, a storage device 200, a memory 300, a DPD circuit unit 400, multiple alignment filters 502-50N (also called non-linear alignment filters) that respectively correspond to multiple radio frequency links RF1-RFN, multiple pre-equalization filters 602-60N that respectively correspond to the multiple radio frequency links RF1-RFN, multiple power amplifiers PA1-PAN that respectively correspond to the multiple radio frequency links RF1-RFN, and a feedback circuit (feedback RX) 110. Through coupled circuits, a transmission sequence of a radio frequency signal that corresponds to the radio frequency link RF1, for example, starts from the processor 100, transmits to the DPD circuit unit 400, transmits to a phase adjustment circuit unit 900, transmits to the power amplifier PA1, and then transmits to a corresponding antenna; a signal transmission sequence of a radio frequency that corresponds to the radio frequency links RF2-RFN, for example (taking the radio frequency link RF2 as an example as follows): starts from the processor 100, transmits to the DPD circuit unit 400, transmits to the phase adjustment circuit unit 900, transmits to the alignment filter 502, transmits to the pre-equalization filter 602, transmits to the power amplifier PA2, and then transmits to a corresponding antenna. In addition, the processor 100 is also electrically connected to the alignment filters 502-50N and the pre-equalization filters 602-60N to output alignment parameter sets and pre-equalization parameters acquired to the corresponding alignment filters 502-50N and the pre-equalization filters 602-60N.

In the embodiment, every radio frequency link has at least one antenna for emitting radio frequency signals. In addition, since the MIMO beamforming device 10 in FIG. 1A has enabled broadband mode, the pre-equalization filters 602-60N are correspondingly enabled/disposed to process a problem of broadband response.

It should be noted that in the radio frequency link RF1 (also called the reference link) that corresponds to the reference power amplifier PA1, there are no alignment filters or pre-equalization filters; in the radio frequency links RF2-RFN (also called the target links) that correspond to the target power amplifiers PA2-PAN other than the reference power amplifier PA1, there are alignment filters and pre-equalization filters.

In an embodiment, the MIMO beamforming device 10 further includes the phase adjustment circuit unit 900 (such as the MIMO phase shifter steering) that is configured to implement beam direction control through accurately controlling the phase of each antenna element to allow the system to form beams directed in specific directions and improve signal strength and coverage; a coupler 800 that is electrically connected to the feedback RX 110 and configured to collect multiple radio frequency signals of the multiple power amplifiers PA1-PAN that correspond to the multiple radio frequency links RF1-RFN and transmits the radio frequency signals collected that correspond to the multiple radio frequency links RF1-RFN to the feedback RX 110; or/and a signal source 700 that is configured to provide an original signal used for training (including a known training data sequence) or other signals to be transmitted (may including various types of data such as audio, video, image, text, etc.).

The processor 100 (also called the controller), being a central control unit of the MIMO beamforming device 10, is responsible for coordinating the operation of various devices/modules/circuit elements. The processor 100 (for example, having a processing circuit system) may include an intelligent hardware device, such as a central processing unit (CPU), a microcontroller unit (MCU), a field-programmable gate array (FPGA), an application-specific integrated circuit (ASIC), etc. MCU is adapted for a scenario that requires real-time control and processing, and has the characteristics of low power consumption and high integration; and FPGA provides a reconfigurable hardware architecture and is adapted for applications that require high parallel processing or frequently updated algorithms. The processor 100 may access and execute multiple code modules from the storage device 200 to implement the MIMO PA full-angle linearization pre-processing method provided by at least one of the embodiments of the disclosure.

The storage device 200 is configured to store data. The storage device 200 may record some data that are required to be stored for a long time through instructions of the processor 100, for example, configured to manage the firmware or software, multiple code modules or database of the MIMO beamforming device 10. In the embodiment, the storage device 200 may be any type of hard disk drive (HDD) or non-volatile memory storage device (such as solid state drive, SSD).

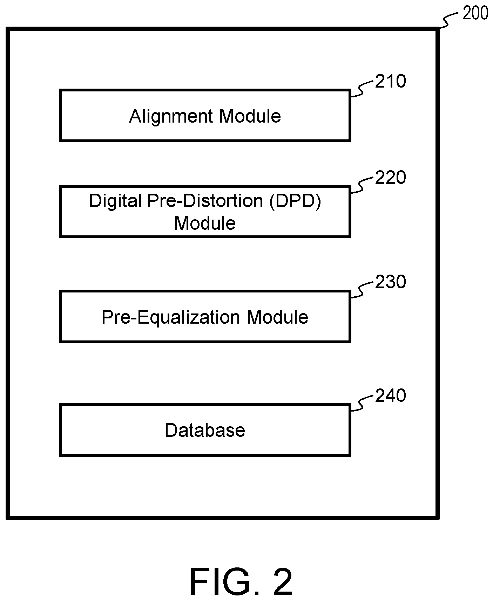

FIG. 2 is a schematic diagram of a storage device according to an embodiment of the disclosure. Please refer to FIG. 2. A storage device 200 may store multiple code modules 210-230 and a database 240. The code modules include: an alignment module 210 that is configured to execute an alignment operation to acquire an alignment parameter set that may be applied to an alignment filter; a digital pre-distortion (DPD) module 220; and a pre-equalization module 230. The database 240 is configured to store various statistical data, models or parameters.

Please return to FIG. 1A. The memory 300 is configured to temporarily store data. The memory 300 may be a separate device independent of the processor 100, or may be integrated within the processor 100. The memory 300 may be a dynamic random access memory (DRAM), a static random access memory (SRAM), etc. However, it must be understood that the disclosure is not limited thereto, and the memory 300 may also be other suitable memories.

The digital pre-distortion (DPD) circuit unit 400 is configured to compensate for the non-linear distortion of a power amplifier (equivalent to performing linearization to the power amplifier). Digital pre-distortion is a technology that pre-processes a signal before the signal enters the power amplifier. The purpose is to compensate for the non-linear distortion of the power amplifier, improve the efficiency of the power amplifier, and reduce adjacent channel interference.

The working principle of the DPD circuit unit 400: the DPD circuit unit 400 performs pre-distortion processing to an input signal. This pre-distortion characteristic is opposite from the non-linear characteristics of the power amplifier. When a DPD signal (having the pre-distortion characteristic) that is output by the DPD circuit unit 400 passes through the power amplifier, two distortions cancel each other, and result in a linearized output (radio frequency signal). In the embodiment, an appropriate DPD parameter set is acquired by the DPD module 220 performing a linearization operation to allow the DPD circuit unit 400 that applies the DPD parameter set to be able to eliminate the response characteristics (such as the non-linear characteristics) of radio frequency signals that are output by the corresponding power amplifier (such as the reference power amplifier/the reference PA).

The alignment filters 502-50N are configured to output aligned signals to the corresponding target power amplifiers after the alignment parameter sets acquired are applied to allow waveforms of radio frequency signals that are output by the target power amplifiers PA2-PAN to tend to be consistent (aligned) with a waveform of a radio frequency signal that is output by the reference power amplifier PA1.

In more detail, please refer to FIG. 1A. Every radio frequency link (RF2, ..., RFN) that corresponds to the target power amplifiers PA2-PAN is provided with a pre-equalization filter (602, ..., 60N). These filters are collectively called the alignment filters. The main function of the alignment filter is to compensate for the frequency response difference between different radio frequency links, and ensure that the target link of the target power amplifier maintains consistent with the reference link of the reference power amplifier in the frequency domain.

Specifically, the alignment filter utilizes an adjustable digital filter structure. A filter coefficient may be dynamically adjusted based on a frequency response of a radio frequency link that is actually measured. When the system is running, the processor 100 may calculate the frequency response difference between each radio frequency link based on the data provided by the feedback RX 110, and generate the corresponding filter coefficients (also called the alignment parameter sets). These coefficients are loaded into the corresponding alignment filters to allow the frequency response of every target link to be adjusted to be consistent with the reference link (usually selecting RF1 as the reference).

The introduction of the alignment filter solves the problem of inconsistent frequency responses between multiple PAs in the traditional MIMO system. This inconsistency may lead to a decline in beamforming performance. System efficacy is affected. The disclosure implements frequency domain alignment of multiple radio frequency links through accurate adjustment of the alignment filter. The foundation for subsequent DPD processing and beamforming is laid, and true full-angle linearization is implemented.

It is worth noting that the adjustment of the alignment filter may be a dynamic process. The system may be calibrated regularly or as needed to adapt to the impact from environmental change or equipment aging. This adaptive mechanism further improves the stability and reliability of the system to allow the disclosure to maintain excellent performance in various complex practical application scenarios.

The pre-equalization filter is another main element to implement MIMO PA full-angle linearization pre-processing. As shown in the figure, a pre-equalization filter 602, ..., 60N is disposed in every target link RF2, ..., RFN. The main function of these pre-equalization filters is to perform pre-compensation to a signal before the signal enters the power amplifier PA2, ..., PAN to offset the frequency response distortion that may be introduced by the power amplifier and a subsequent radio frequency path thereof.

The pre-equalization filter utilizes a programmable digital filter structure. The filter coefficient may be dynamically adjusted based on the frequency response characteristics of a power amplifier and a radio frequency path that is actually measured. The processor 100 may analyze the non-linear characteristics and frequency response of every power amplifier based on the data provided by the feedback RX 110, and then calculate the corresponding pre-equalization filter coefficients (also called the pre-equalization parameters). These coefficients are loaded into each pre-equalization filter to allow the frequency response of every radio frequency link at an output end of a power amplifier to achieve the expected linearity and consistency in intermediate spectrum and spread spectrum. Impact of interference signals is eliminated. In this way, coherent broadband signals may accomplish the benefits of full-angle MIMO beamforming gain through coherent summation.

The pre-equalization filter works in conjunction with the foregoing alignment filter. The alignment filter mainly processes differences between radio frequency links, and the pre-equalization filter focuses on compensating for the non-linear characteristics in spread spectrum after synthesizing radio frequency signals of every PA. This dual filtering strategy ensures that the entire MIMO beamforming device 10 may maintain excellent linearity and consistency in each direction. In addition, the adjustment of the pre-equalization filter of the disclosure may also be a dynamic process. The system may continuously monitor changes in radio frequency signals of every PA through the feedback RX 110 and update the coefficients (also called the pre-equalization parameters) of the pre-equalization filter in real time.

The power amplifiers PA1-PAN are core elements in the MIMO beamforming device 10 and are responsible for amplifying a radio frequency signal to a required power level. As shown in the figure, every radio frequency link RF1-RFN is provided with an independent power amplifier.

Due to differences in the inherent characteristics and manufacturing processes of semiconductor devices, every power amplifier may express slightly different non-linear characteristics and frequency responses. These differences may lead to performance decline in the traditional MIMO system, but the differences may be effectively solved through innovative pre-processing technology in the disclosure.

The non-linear characteristics of a power amplifier are mainly expressed in AM-AM (amplitude vs. amplitude) and AM-PM (amplitude vs. phase) distortion. These non-linear effects may lead to signal distortion, spectral spreading, and adjacent channel interference. The disclosure may first use an initialization operation to acquire the non-linear characteristics of every power amplifier to provide a basis for subsequent processing.

In addition, the disclosure may also dynamically re-execute the initialization operation to monitor latest changes of the power amplifier in real time. Characteristic changes due to physical factors, such as temperature or aging, may be resisted to ensure that an optimal linearization effect may be maintained under various working conditions.

The feedback RX 110 is configured to collect radio frequency signals that are feedbacked (such as radio frequency signals that are output from PA1-PAN) to provide to the processor 100 to execute various operations that require the utilization of the radio frequency signals that are feedbacked.

In more detail, in an embodiment, the feedback RX 110 has a dual-mode switching function that includes a first mode (OTA mode) and a second mode (coupling mode).

In the first mode, the feedback RX 110 utilizes an OTA RX (over-the-air reception) antenna to collect radio frequency signals RF1 to RFN from the atmosphere. This mode simulates an actual communication environment. Impact of various actual factors on the signals, including antenna radiation characteristics, multipath effects and environmental interference, may be captured. The OTA mode is particularly adapted for the actual deployment and debugging of the system and dynamic environment adaptation. The effectiveness of the linearization effect in actual application scenarios is ensured. In addition, this mode may also be adapted for the MIMO beamforming device 10 with an extremely large number of antennas. Design complexity of using the coupler 800 to collect radio frequency signals that are feedbacked is avoided.

In the second mode, the feedback RX 110 directly collects radio frequency signal samples from each radio frequency link through the coupler 800. This mode provides a more direct and more accurate signal measurement. The second mode may directly capture the output characteristics of every power amplifier. Interference errors due to environmental factors is avoided.

The mode switching of the feedback RX 110 may be controlled by the processor 100. The system may automatically or manually select the most appropriate feedback mode based on the current working requirements and environmental conditions. No matter in which mode, the feedback RX 110 transmits the signals that are collected to the processor 100 for analysis. The processor 100 calculates the actual transmission characteristics of the device, through comparing an emitted signal and a received signal, that include main parameters such as the degree of non-linear distortion of every power amplifier and the frequency response difference between each radio frequency link. These data are configured to update the coefficients of the pre-equalization filter and the alignment filter in real time and implement adaptive optimization of the device.

The dual-mode design of the feedback RX 110 not only improves the flexibility and accuracy of the system, but also provides a powerful tool for comprehensive performance evaluation of the MIMO beamforming device 10. For example, in an embodiment, impact of antenna radiation characteristics on device performance may be separated through comparing measurement results in the OTA mode and the coupling mode. An important reference for further optimization of antenna design and the device is provided.

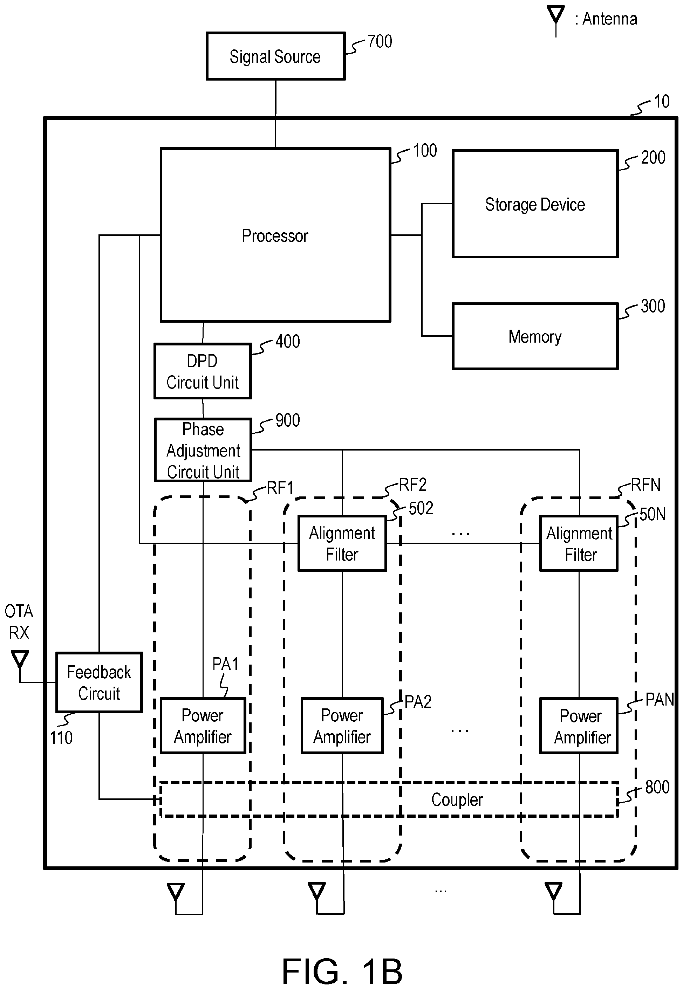

FIG. 1B is a block diagram of a MIMO beamforming device according to another embodiment of the disclosure.

Please refer to FIG. 1B. The biggest difference from FIG. 1A is that the MIMO beamforming device 10 is in narrowband mode (or without enabling broadband mode). In this condition, the MIMO beamforming device 10 may not include pre-equalization filters. Reference numerals in FIG. 1B that are the same as the reference numerals in FIG. 1A represent the same hardware elements, so details thereof will not be described here. In addition, since every radio frequency link does not have any pre-equalization filter, the power amplifier PA1 may be electrically connected to the phase adjustment circuit unit 900; the power amplifiers PA2-PAN may be individually electrically connected to the alignment filters 502-50N.

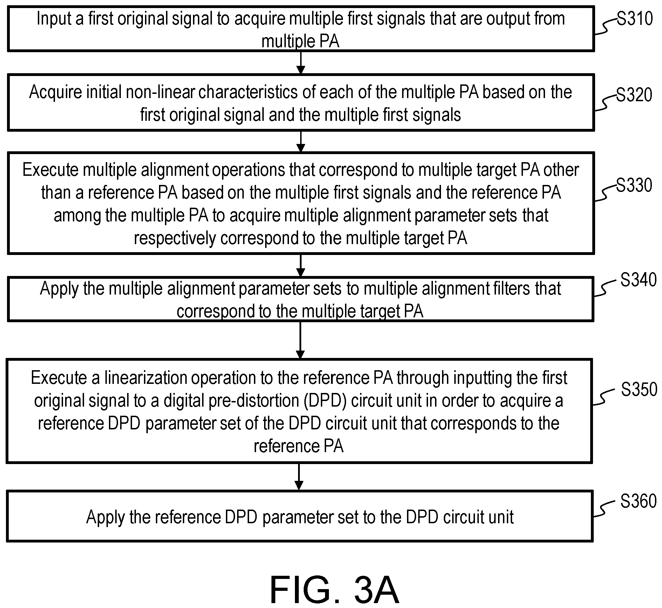

FIG. 3A is a flow chart of a MIMO PA full-angle linearization pre-processing method according to an embodiment of the disclosure. The MIMO PA full-angle linearization pre-processing method provided in FIG. 3A is implemented in narrowband mode (or without enabling broadband mode). Please refer to FIG. 1B and FIG. 3A, in step S310, the processor 100 inputs a first original signal to acquire multiple first signals that are output from multiple PAs. In an embodiment, during a period of executing step S310, the DPD circuit unit 400, the alignment filters 502-50N, and the pre-equalization filters 602-60N are not enabled (or are bypassed) to directly acquire the characteristics (such as initial non-linear characteristics) of the most original (unadjusted) first signal that is output by every PA. It should be first noted here that the description about "acquiring signals that are output from the power amplifier" in the following embodiment is used to describe that the processor 100 acquires signals that are output by the feedbacked power amplifier through the feedback RX 110. The first original signal is a known signal. For example, the first original signal includes predetermined training sequence data.

Next, in step S320, the processor 100 acquires initial non-linear characteristics of each of the multiple PAs based on the first original signal and the first signals. Specifically, the foregoing step may also be called an initialization operation that is configured to acquire the initial non-linear characteristics of every PA before a linearization operation and an alignment operation have been executed in order to execute the alignment operation and the linearization operation to all PA based on the non-linear characteristics of every PA.

In an embodiment, the processor 100 may build an accurate non-linear model for every PA. This model may utilize polynomial models, Volterra series, or other appropriate mathematical forms to describe the non-linear characteristics of every PA. For example, the non-linear characteristics that correspond to the power amplifiers PA1-PAN may be expressed by polynomials $c^{(1)}$-$c^{(N)}$ (also called characteristic equation of the power amplifiers PA1-PAN). These equations describe the relationship between an input signal and an output signal of a PA. Radio frequency signals that are output by the power amplifiers PA1-PAN are expressed by $y^{(1)}$-$y^{(N)}$. Corresponding matrix forms (memory polynomial (MP) matrix model) are $Y^{(1)}$-$Y^{(N)}$. For example: $y^{(i)}=c^{(i)}(x)$. x is an input signal, and $y^{(i)}$ is an output signal that corresponds to the i-th power amplifier. $c^{(i)}(x)$ is, for example, $a_1x+a_2x^2+a_3x^3+....$

In an embodiment, the processor 100 uses a statistical method (such as least squares method) to fit data to obtain specific values of multiple coefficients of the characteristic equation of every PA.

In an embodiment, an initialization stage is: first use a training sequence (first original signal) x to operate in a PA linear mode; use the training sequence x to acquire the non-linear characteristics $C^{(1)}$-$C^{(N)}$ of every PA. In another embodiment, the initialization stage further includes: using an indirect learning method to acquire DPD parameter sets $c^{(1)}_{DPD}$-$c^{(N)}_{DPD}$ that correspond to every PA.

Next, in step S330, multiple alignment operations that correspond to multiple target PAs other than a reference PA are executed through executing the alignment module 210 based on the multiple first signals and the reference PA among the multiple PAs to acquire multiple alignment parameter sets that respectively correspond to the multiple target PAs.

After the alignment parameter sets are acquired, in step S340, the processor 100 applies the multiple alignment parameter sets to the multiple alignment filters 502-50N that correspond to the multiple target PAs. In this way, the processor 100 may adjust multiple aligned first signals that are output from the multiple alignment filters to allow the frequency responses and non-linear characteristics of the multiple radio frequency signals that are output by the multiple PAs to be consistent.

In step S350, a linearization operation is executed to the reference PA, through executing the DPD module 220 and inputting the first original signal to the digital pre-distortion (DPD) circuit unit 400, in order to acquire a reference DPD parameter set of the corresponding reference PA of the DPD circuit unit 400.

After the reference DPD parameter set is acquired, in step S360, the processor 100 applies the reference DPD parameter set to the DPD circuit unit 400. In this way, the processor 100 adjusts a DPD signal that is output from the DPD circuit unit to allow output signals of the multiple PAs to implement linearization within the entire operation frequency range to reduce non-linear distortion and improve signal quality.

After the multiple alignment parameter sets and the reference DPD parameter set are applied, the radio frequency signals that are output from the power amplifiers PA1-PAN are linearized, and the characteristics of radio frequency signals of a target link may be consistent (aligned) with the characteristics of radio frequency signals of a reference link.

First, relevant details of the linearization operation are described first. The linearization operation includes: the first original signal (such as x) is input to the DPD circuit unit 400 to acquire a first DPD signal (such as s) (initialization s= x) that is output from the DPD circuit unit 400; the first DPD signal is input to the reference power amplifier PA1 to acquire a linearized first signal (such as $y^{(1)}$) that corresponds to the reference power amplifier PA1; a DPD parameter set of the DPD circuit unit is adjusted, and whether the first original signal (x) and the subsequent linearized first signal ($y^{(1)}$) are compatible with a preset linearization condition is determined; and a latest adjusted DPD parameter set is recognized as the reference DPD parameter set in response to determining that the first original signal and the subsequent linearized first signal are compatible with the preset linearization condition. After the reference DPD parameter set is applied to the DPD circuit unit, the response characteristics of a radio frequency signal that is output from the reference PA are linearized.

For example, first assume the following scenario: $y^{(1)}$ is an output signal of the reference power amplifier PA1 and is a signal amplified by PA1 after DPD processing; x is an original input signal and is also a radio frequency signal that is ultimately expected to be sent; $c^{(1)}_{DPD}$ is a DPD parameter set to be found; s is a signal after DPD processing, and s should be equal to x in an ideal condition.

The process of the linearization operation is to find the appropriate $c^{(1)}_{DPD}$ to allow the ultimate output $y^{(1)}$ of x after DPD processing and then passing through PA1 to be as close to x as possible. The steps may be described more precisely as follows: initially, assume s = x (that is, no pre-distortion).

s is passed through PA1 to obtain an output $y^{(1)}$.

An indirect learning method is used to try to find a DPD parameter set $c^{(1)}_{DPD}$, so that when $y^{(1)}$ passes through the DPD circuit unit 400 that applies the DPD parameter set $c^{(1)}_{DPD}$, a first DPD signal s that is output may be as close to x as possible. "s may be as close to x as possible" may be regarded as a condition of linearization.

Mathematically, the first DPD signal s may be expressed as Formula (1):

$$s = Y^{(1)} \cdot c^{(1)}_{DPD} \qquad\qquad (1)$$

$Y^{(1)}$ is a matrix form of $y^{(1)}$. By using Formula (1) to solve $c^{(1)}_{DPD}$, Formula (2) may be obtained:

$$c^{(1)}_{DPD} = (Y^{(1)})^{-1} \cdot s \approx (Y^{(1)})^{-1} \cdot x \qquad\qquad (2)$$

In an embodiment, since $y^{(1)}$ may be obtained by the non-linear characteristics of the reference power amplifier PA1 that are acquired by the initialization operation, and x is also known, the reference DPD parameter set $c^{(1)}_{DPD}$ may be directly calculated.

In another embodiment, the processor 100 may iterate the foregoing process (such as minimum mean square error algorithm) by gradually adjusting a specific value of $c^{(1)}_{DPD}$ to linearize an output of PA1 as much as possible after DPD processing. An iterative method may: a) gradually optimize DPD coefficients and reduce the impact of an initial measurement error; b) adapt to dynamic changes of PA; c) find an optimal approximate solution in a condition of a simplified model; d) provide better value stability.

In another embodiment, when the system does not have very high requirements for calculation speed but has higher requirements for precision, a method of directly calculating an initial reference DPD parameter set $c^{(1)}_{DPD}$ first and then performing iterative optimization is utilized.

Relevant details of the alignment operation are described as follows. The alignment operation for a target PA includes: the first original signal is input to the DPD circuit unit to execute the linearization operation to the target PA in order to acquire a target DPD parameter set of the DPD circuit unit that corresponds to the target PA; the first original signal is input to the reference PA in a condition where the DPD circuit unit is not used to acquire a reference first signal that is output from the reference PA; the reference first signal is input to the DPD circuit unit that has applied the target DPD parameter set to acquire an alignment reference signal output from the DPD circuit unit that corresponds to the target PA; and an alignment parameter set that corresponds to the PA is acquired, based on the first original signal and the alignment reference signal. The alignment parameter set that corresponds to the target PA is applied to an alignment filter that corresponds to the target PA to adjust an aligned first signal that is output from the alignment filter to allow response characteristics of a radio frequency signal that is output from the target PA to be consistent with response characteristics of a radio frequency that is output from the reference PA.

For example, after the initialization operation and the linearization operation, non-linear characteristics (such as $Y^{(1)}$-$Y^{(N)}$) and DPD parameter sets (such as $c^{(1)}_{DPD}$-$c^{(N)}_{DPD}$) of every power amplifier may be acquired.

Next, taking the target power amplifier PA2 as an example, the reference first signal $y^{(1)}$ that is output from the reference power amplifier PA1 is input to a target DPD parameter set $c^{(2)}_{DPD}$ that corresponds to the target power amplifier PA2 to acquire a desired goal of an alignment reference signal $z^{(2)}$. This process may be expressed by an equation as: $z^{(2)}$ =$Y^{(1)} \cdot c^{(2)}_{DPD}$. That is to say, if the alignment is accurate, the alignment reference signal $z^{(2)}$ after passing through the alignment filter 502 may ideally be equal to $Y^{(1)} \cdot c^{(2)}_{DPD}$.

Next, an alignment parameter set $\Delta c^{(2)}$ to be applied to the alignment filter 502 may be determined by using the linearized signal s and the alignment reference signal $z^{(2)}$.

In more detail, after the first original signal x is input to the alignment filter 502 that applies the alignment

parameter set $\Delta c^{(2)}$, the alignment filter 502 outputs $z^{(2)}$. This process may be expressed by an equation as: $z^{(2)}=X\cdot\Delta c^{(2)}$. X is a MP matrix that corresponds to the first original signal x.

In other words, a relationship may be obtained: $z^{(2)}=Y^{(1)}\cdot c^{(2)}{}_{DPD}=X\cdot\Delta c^{(2)}$. Furthermore, by $Y^{(1)}\cdot c^{(2)}{}_{DPD}=X\cdot\Delta c^{(2)}$, Formula (3) that is configured to calculate $\Delta c^{(2)}$ may be derived:

$$\Delta c^{(2)} = X^{-1}\cdot Y^{(1)}\cdot c^{(2)}{}_{DPD} \qquad (3)$$

That is, the alignment parameter set $\Delta c^{(2)}$ of the alignment filter 502 that corresponds to the target power amplifier PA2 is acquired based on the first original signal x and the alignment reference signal $z^{(2)}=Y^{(1)}\cdot c^{(2)}{}_{DPD}$. Similarly, alignment parameter sets of alignment filters of other target power amplifiers may also be acquired through this process (such as, $\Delta c^{(i)}= X^{-1}\cdot Y^{(1)}\cdot c^{(i)}{}_{DPD}$, i=2-N).

After the foregoing alignment operation and linearization operation are accomplished, there may still be problems of broadband response for radio frequency signals in broadband mode. Therefore, further signal optimization methods are required for a system that enables broadband mode.

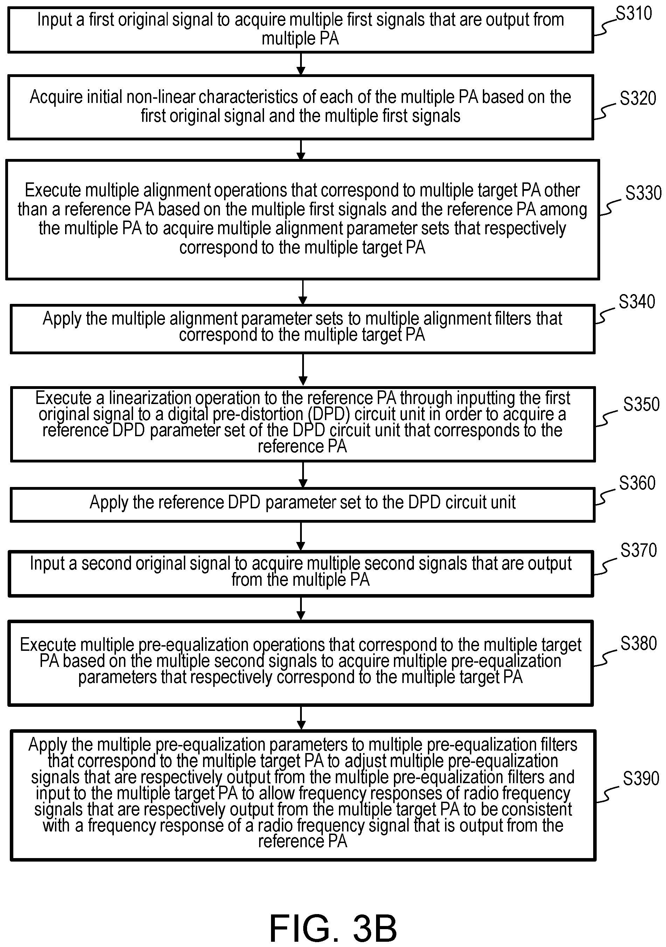

FIG. 3B is a flow chart of a MIMO PA full-angle linearization pre-processing method according to another embodiment of the disclosure. The difference between FIG. 3B and FIG. 3A is that the processor 100 may execute steps S370, S380, and S390 in response to enabling broadband mode. Details of steps S3 10-S360 are the same as details in FIG. 3A and will not be described again.

In step S370, the processor 100 inputs a second original signal x', in response to determining that broadband mode is enabled, to acquire multiple second signals (such as $y'^{(i)}$) that are output from the multiple PAs. The second original signal x' is a known signal. For example, the second original signal x' includes pre-determined training sequence data.

Next, in step S380, the processor 100 executes multiple pre-equalization operations that correspond to the multiple target PAs based on the multiple second signals to acquire multiple pre-equalization parameters (such as $q^{(i)}$) that respectively correspond to the multiple target PAs.

Next, in step S390, the processor 100 applies the multiple pre-equalization parameters to the multiple pre-equalization filters 602-60N that correspond to the multiple target power amplifiers PA2-PAN to adjust multiple pre-equalization signals that are respectively output from the multiple pre-equalization filters 602-60N and input to the multiple target power amplifiers PA2-PAN to allow frequency responses of radio frequency signals that are respectively output from the multiple target power amplifiers PA2-PAN to be consistent with a frequency response of a radio frequency signal that is output from the reference power amplifier PA1.

In more detail, the pre-equalization operation for a target PA includes: a Toeplitz matrix that corresponds to a target second signal is built by using the target second signal that corresponds to the target PA among the multiple second signals, and then an inverse Toeplitz matrix (an inverse matrix of the Toeplitz matrix) that corresponds to the target second signal is acquired; a pre-equalization parameter that corresponds to the target PA is acquired based on a reference second signal that corresponds to a reference PA among the second signals and the inverse Toeplitz matrix that corresponds to the target second signal.

For example, according to a pre-equalization operation for the target power amplifier PA2, after an acquired reference DPD parameter set is applied to the DPD circuit unit 400, and an acquired alignment parameter set is applied to the alignment filter 502, the processor 100 inputs another original signal (second original signal x') to the DPD circuit unit 400 to acquire a radio frequency signal (target second signal $y'^{(2)}$) that is output by the target power amplifier PA2 of the radio frequency link RF2 in order to acquire the response characteristics (such as $\tilde{c}^{(2)}$) of the current target radio frequency link RF2 by comparing x' and $y'^{(2)}$. An equation is expressed as: $\tilde{c}^{(2)} = \tilde{c}^{(2)}\otimes\Delta c^{(2)}\otimes c^{(1)}{}_{DPD}$. $\Delta c^{(2)}$ is the alignment parameter set that is applied to the alignment filter 502; $c^{(1)}{}_{DPD}$ is the reference DPD parameter set; $c^{(2)}$ is original response characteristics of the target link RF2 (such as, including the non-linear characteristics that correspond to the target power amplifier PA2).

It is worth mentioning that the response characteristics $\tilde{c}^{(1)}$ that corresponds to a reference link may be acquired by using an equation: $\tilde{c}^{(1)} = c^{(1)}\otimes c^{(1)}{}_{DPD}$. $c^{(1)}{}_{DPD}$ is a reference DPD parameter set; $c^{(1)}$ is original response characteristics of the reference link RF1 (such as, including the non-linear characteristics that correspond to the target power amplifier PA1).

Next, a Toeplitz matrix $\tilde{C}^{(2)}$ that corresponds to $\tilde{c}^{(2)}$ is built.

Since a goal of the pre-equalization operation is to allow the response characteristics $\tilde{c}^{(2)}$ that corresponds to the target link RF2 after pre-equalization to be consistent with the response characteristics $\tilde{c}^{(1)}$ of the reference link RF1. Therefore, this goal may be expressed as $\tilde{c}^{(1)} = \tilde{C}^{(2)}\cdot q^{(2)}$. $q^{(2)}$ is a pre-equalization parameter.

In other words, the pre-equalization parameter $q^{(2)}$ that corresponds to the pre-equalization filter 602 may be acquired by using Formula (4):

$$q^{(2)} = (\tilde{C}^{(2)})^{-1} \cdot \tilde{c}^{(1)} \qquad (4)$$

$(\tilde{C}^{(2)})^{-1}$ is an inverse Toeplitz matrix of the response characteristics & $^{(2)}$ of the target link RF2; $\tilde{c}^{(1)}$ is the response characteristics of the reference link RF1 that has applied the reference DPD parameter set. In other words, a pre-equalization parameter $q^{(i)}$ of the target links RF2-RFN may be expressed as: $q^{(i)} = (\tilde{C}^{(i)})^{-1} \cdot \tilde{c}^{(1)}$. i=2-N.

After the pre-equalization parameter $q^{(i)}$ is acquired, the pre-equalization parameter $q^{(i)}$ may be applied to the corresponding pre-equalization filters 602-60N to eliminate the interference problem of broadband response between multiple PAs.

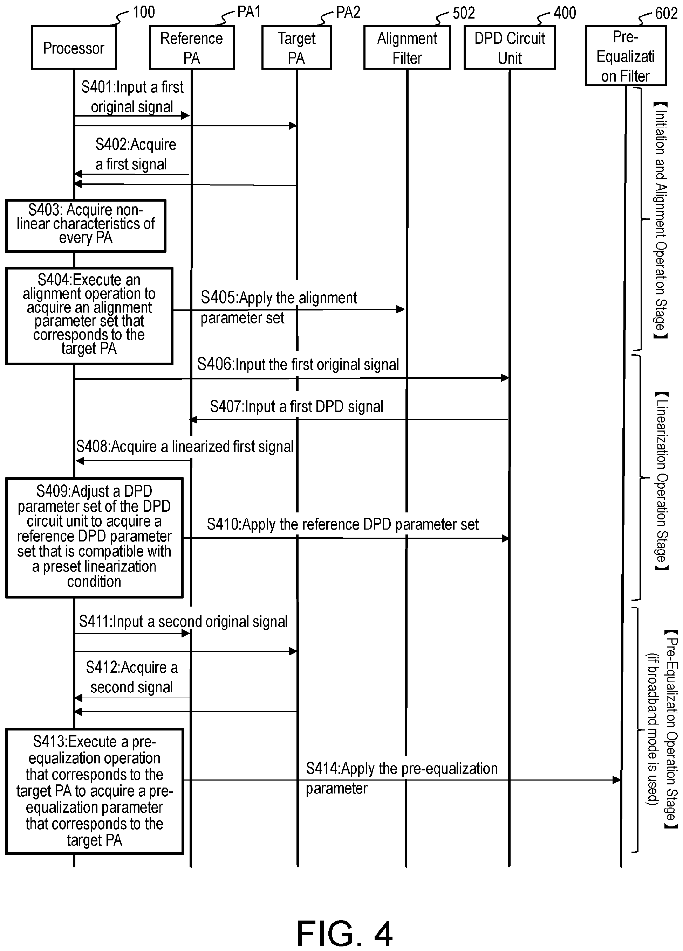

FIG. 4 is a sequence diagram of a MIMO PA full-angle linearization pre-processing method according to an embodiment of the disclosure. Please refer to FIG. 4. The MIMO PA full-angle linearization pre-processing method may be divided into three main stages: an initialization and alignment operation stage, a linearization operation stage, and a pre-equalization operation stage (if broadband mode is used).

In the initialization and alignment operation stage, the processor 100 first inputs a first original signal to the reference power amplifier PA1 and the target power amplifiers PA2-PAN (taking PA2 as an example for descriptions as follows) (step S401). Next, a first signal that is feedbacked is received from the reference PA and the target PA (step S402). Next, the processor 100 acquires the non-linear characteristics of every PA (step S403) based on the first signal that is acquired, and executes an alignment operation to acquire an alignment parameter set that corresponds to the target PA (step S404). Next, the alignment parameter set is applied to the alignment filter 502 (step S405). At this point, the alignment operation stage is accomplished.

In the linearization operation stage, the processor 100 inputs the first original signal to the DPD circuit unit 400 (step S406). The DPD circuit unit 400 inputs a first DPD signal to the reference PA (step S407). Next, the processor 100 acquires a linearized first signal that is feedbacked (step S408). Next, the processor 100 adjusts a DPD parameter set of the DPD circuit unit 400 based on the linearized first signal that is feedbacked, to acquire a reference DPD parameter set that is compatible with a preset linearization condition (step S409), and applies the reference DPD parameter set to the DPD circuit unit 400 (step S410). At this point, the linearization operation stage is accomplished.

If broadband mode is used, the pre-equalization operation stage is entered. The processor 100 inputs second original signals to the reference PA and the target PA (step S411). Next, the processor 100 acquires second signals that are feedbacked (step S412), and accordingly executes a pre-equalization operation that correspond to the target PA to acquire a pre-equalization parameter (step S413). Finally, the processor 100 applies the pre-equalization parameter to the pre-equalization filter 602 (step S414). At this point, the pre-equalization operation stage is accomplished.

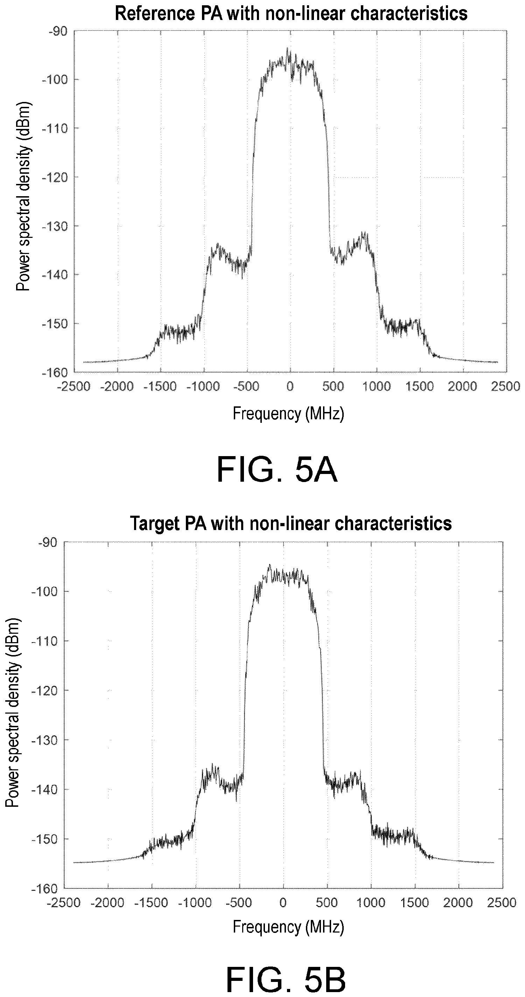

The following uses FIG. 5A to FIG. 8B to illustrate the technical effects provided by the disclosure.

FIG. 5A is a spectrogram corresponding to a radio frequency signal output from a reference PA according to an embodiment of the disclosure. FIG. 5B is a spectrogram corresponding to a radio frequency signal output from a target PA according to an embodiment of the disclosure. These two figures intuitively present the output characteristics of power amplifiers without linearization processing through a form of spectrogram.

FIG. 5A and FIG. 5B reflect the non-linear characteristics of a broadband radio frequency signal (basic frequency is about 450 MHz, bandpass is 900 MHz) of a reference PA (such as PA1) and a target PA (such as PA2) in a condition where no pre-processing has been executed. In addition, it may also be known spread spectra of PA1 and PA2 are not consistent.

In other words, by FIG. 5A and FIG. 5B, it may also be known that the non-linear characteristics between the reference PA and the target PA are not the same.

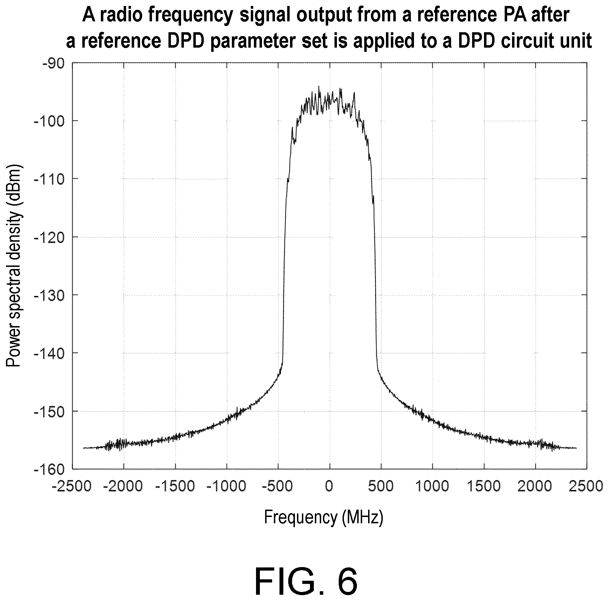

FIG. 6 is a spectrogram corresponding to a radio frequency signal output from a reference PA after a linearization operation is executed according to an embodiment of the disclosure. Please refer to FIG. 6. It may be obvious that, comparing with the output of the reference PA that has not been processed in FIG. 5A, the spectrum in FIG. 6 has been significantly improved. The main frequency band signal maintains an original power level, but spectral spreading and non-linear distortion are effectively suppressed. Specifically, the edges of the main frequency band (+500 MHz to -500 MHz) become steeper, and the bulge on the shoulders of the spectrum is significantly reduced. Interference from neighboring channels is obviously reduced, and side lobes are effectively suppressed. The overall spectral shape becomes smoother. An ideal rectangular spectrum is approached.

In other words, through comparing with FIG. 5A, it may be seen that after an appropriate reference DPD parameter set is applied to the DPD circuit unit, linearization of a radio frequency signal of a reference link may improve signal distortion caused by the non-linear characteristics.

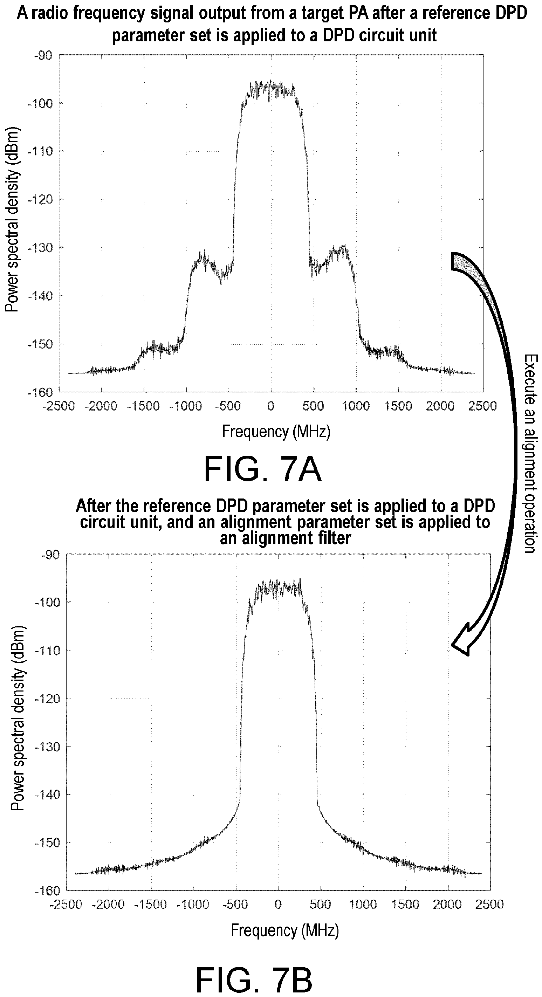

FIG. 7A is a spectrogram corresponding to a radio frequency signal output from a target PA after a DPD parameter corresponding to a reference PA is applied according to an embodiment of the disclosure. FIG. 7B is a spectrogram corresponding to a radio frequency signal output from a target PA after a DPD parameter corresponding to a reference PA is applied and an alignment operation is executed according to an embodiment of the disclosure. FIG. 7A and FIG. 7B exhibit the effects of an alignment operation in the disclosure. These two figures present the output characteristics of a target PA at different processing stages through a form of spectrogram.

FIG. 7A displays a spectrogram of a radio frequency signal output by a target PA after a reference DPD parameter set is applied to the DPD circuit unit 400. It may be seen from the figure, DPD processing of a corresponding reference DPD parameter set is performed, but the output of the target PA still has obvious non-linear distortion. This indicates that directly applying the reference DPD parameter that optimizes a reference PA to the target PA is not effective to compensate the non-linear characteristics of the target PA.

FIG. 7B exhibits a spectrogram of a radio frequency signal output by a target PA after an alignment operation is executed, a reference DPD parameter set is applied to the DPD circuit unit 400, and an alignment parameter set is applied to an alignment filter. Comparing with FIG. 7A, the spectrum in FIG. 7B has been significantly improved: the power level of the main band signal has been appropriately adjusted and is more consistent with the output of the reference PA. Spectral spreading and non-linear distortion are effectively suppressed, and the bulge on the shoulders of the spectrum is significantly reduced. Interference from neighboring channels is obviously reduced. The overall spectral shape is smoother. An ideal rectangular spectrum is approached. The linearization effect of the target PA shown in FIG. 7B is comparable with the linearization effect of the reference PA shown in FIG. 6.

That is to say, through comparing these two figures, the importance and effectiveness of the alignment operation provided by the disclosure may be exhibited. Through the alignment operation, the disclosure successfully adjusts the response characteristics of a target link to allow alignment with the response characteristics of a reference link to implement effective linearization of all target PA. This method not only simplifies the system structure (one DPD unit is required), but also ensures the consistency of the response characteristics of all PA in the MIMO system in order to implement beamforming of higher performance.

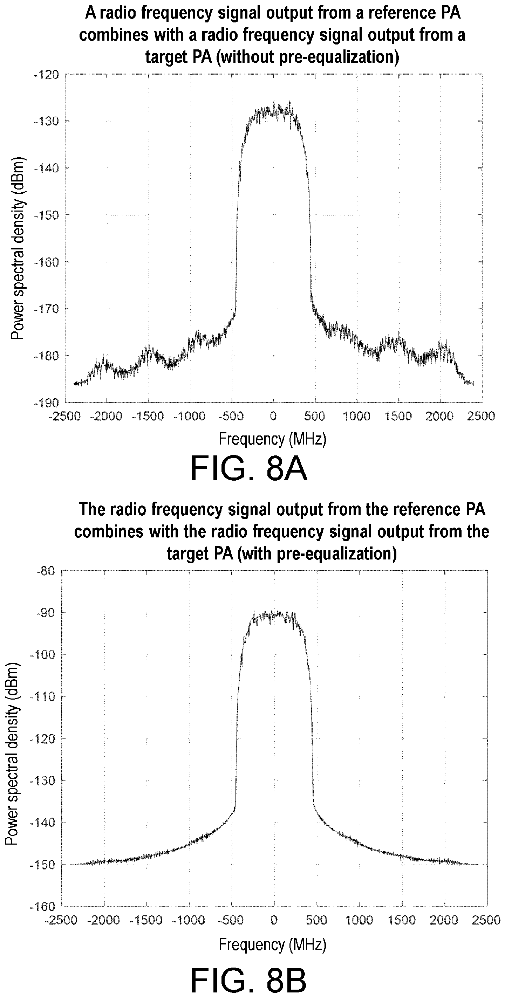

FIG. 8A is a spectrogram of an added radio frequency signal of a reference PA and a target PA after a DPD parameter corresponding to the reference PA has been applied and an alignment operation has been executed according to an embodiment of the disclosure. FIG. 8B is a spectrogram of an added radio frequency signal of a reference PA and a target PA after a DPD parameter corresponding to the reference PA has been applied, an alignment operation has been executed, and a pre-equalization operation has been executed according to an embodiment of the disclosure.

FIG. 8A and FIG. 8B exhibit the effect of a pre-equalization operation of the disclosure. These two figures intuitively present the characteristics after radio frequency signals of a reference PA and a target PA have been synthesized through a form of spectrogram.

FIG. 8A displays a spectrogram of a radio frequency signal output by a reference PA combining with a radio frequency signal output by a target PA without performing pre-equalization processing. It may be observed from the figure that non-linear alignment and DPD processing are performed, but a synthesized signal still has some problems: the power level in the center of the main frequency band has declined compared to an output of a single PA. Some irregular fluctuations exist in spread spectrum (-500 MHz to -2500 MHz; 500 MHz to 2500 MHz). The frequency response difference between PAs is displayed.

FIG. 8B exhibits a spectrogram of a radio frequency signal output by a reference PA combining with a radio frequency signal output by a target PA after pre-equalization processing is performed. Comparing with FIG. 8A, the spectrum in FIG. 8B has significantly improved: the power level in the center of the main frequency band is obviously higher. An ideal superimposition is indicated to be implemented. The spectral shape is more regular with steep edges. An ideal rectangular spectrum is approached. Interference outside the main frequency band is further suppressed, and the part of spread spectrum is smoother.

The contrast of these two figures clearly exhibits the importance and effectiveness of the pre-equalization operation of the disclosure. Through pre-equalization processing, the system successfully compensates for the frequency response difference between different PA, implements perfect synthesis of radio frequency signals, eliminates the problem of broadband response interference faced by beamforming in broadband mode, and improves power efficiency and spectral efficiency of the radio frequency signals emitted by a device.

It is worth mentioning that in the foregoing embodiment, the alignment module 210, the DPD module 220, and the pre-equalization module 230 are implemented in a form of software, but the disclosure is not limited thereto. For example, in other embodiments, the alignment module 210, the DPD module 220, and the pre-equalization module 230 may be replaced by circuit elements with the same functions, such as an alignment parameter calculation circuit unit (electrically connected to an alignment filter and the feedback RX 110), a DPD parameter calculation circuit unit (electrically connected to the DPD circuit unit and the feedback RX 110), and a pre-equalization parameter calculation circuit unit (electrically connected to the pre-equalization filter and the feedback RX 110).

Based on the above, at least one of the embodiments of the disclosure provides a new MIMO PA full-angle linearization pre-processing method and a MIMO full-angle linearization beamforming device using the method. Output signals of the multiple PAs may be acquired through inputting the original signals. The initial non-linear characteristics of every PA are captured. Next, the reference PA is selected, and the alignment operation is executed to the other target PAs. The corresponding alignment parameter sets are acquired and applied to the individual alignment filters. This step effectively unifies the non-linear characteristics of the multiple PAs. Subsequently, the linearization operation is executed for the reference PA. The reference DPD parameter set is acquired and applied to the DPD circuit unit to implement linearization of the radio frequency signals. In this way, in a condition where one DPD circuit unit is required, linearization of the multiple PAs may be implemented within a full-angle range. System complexity and cost are significantly reduced. More importantly, in broadband mode, the disclosure may further execute the pre-equalization operation to solve a non-linear broadband response problem of spread spectrum of synthesized radio frequency signals of the multiple PAs in order to maintain the full-angle linearization effect.

In summary, the disclosure provides a new MIMO PA full-angle linearization pre-processing method and a MIMO full-angle linearization beamforming device using the method. A combination of the alignment operation, the linearization operation and the pre-equalization operation, and the strategy of having the reference PA as a reference point may allow the entire MIMO beamforming device to maintain consistent and optimized performance in each direction. This method ensures that no matter which angle a signal is emitted or received, the device may maintain a high degree of linearity and consistency by the adaptive characteristics. The spectral efficiency and signal quality of the device are improved.

**Claims**

1. A multi-input multi-output (MIMO) power amplifier (PA) (PA1, PA2) full-angle linearization pre-processing method for a MIMO beamforming device (10) with a plurality of PAs (PA1, PA2) that correspond to a plurality of radio frequency links (RF1, RF2, RFN), the method comprising:

   inputting a first original signal to acquire a plurality of first signals that are output from the plurality of PAs (PA1, PA2);
   acquiring initial non-linear characteristics of each of the plurality of PAs (PA1, PA2) based the first original signal and the plurality of first signals;
   executing a plurality of alignment operations that correspond to a plurality of target PAs (PA1, PA2) other than a reference PA based on the plurality of first signals and the reference PA among the plurality of PAs (PA1, PA2) to acquire a plurality of alignment parameter sets that respectively correspond to the plurality of target PAs target (PA1, PA2);
   applying the plurality of alignment parameter sets to a plurality of alignment filters (502-50N) that correspond to the plurality of target PAs (PA1, PA2);
   executing a linearization operation to the reference PA through inputting the first original signal to a digital pre-distortion (DPD) circuit unit (400) in order to acquire a reference DPD parameter set of the DPD circuit unit (400) that corresponds to the reference PA; and
   applying the reference DPD parameter set to the DPD circuit unit (400).

2. The MIMO PA (PA1, PA2) full-angle linearization pre-processing method according to claim 1, wherein the linearization operation comprises:

   inputting the first original signal to the DPD circuit unit (400) to acquire a first DPD signal that is output from the DPD circuit unit (400);
   inputting the first DPD signal to the reference PA to acquire a linearized first signal that corresponds to the reference PA;
   adjusting a DPD parameter set of the DPD circuit unit (400) and determining whether the first original signal and the subsequent linearized first signal are compatible with a preset linearization condition; and
   recognizing the latest adjusted DPD parameter set as the reference DPD parameter set, in response to determining that the first original signal and the subsequent linearized first signal are compatible with the preset linearization condition, wherein after the reference DPD parameter set is applied to the DPD circuit unit (400), response characteristics of a radio frequency signal that is output from the reference PA are linearized.

3. The MIMO PA (PA1, PA2) full-angle linearization pre-processing method according to claim 1, wherein the alignment operation for a target PA (PA1, PA2) comprises:

   inputting the first original signal to the DPD circuit unit (400) to execute the linearization operation to the target PA (PA1, PA2) in order to acquire a target DPD parameter set of the DPD circuit unit (400) that corresponds to the target PA (PA1, PA2);
   inputting the first original signal to the reference PA in a condition where the DPD circuit unit (400) is not used to acquire a reference first signal that is output from the reference PA;
   inputting the reference first signal to the DPD circuit unit (400) that has applied the target DPD parameter set to acquire an alignment reference signal output from the DPD circuit unit (400) that corresponds to the target PA (PA1, PA2); and

acquiring an alignment parameter set that corresponds to the target PA (PA1, PA2) based on the first original signal and the alignment reference signal, wherein the alignment parameter set that corresponds to the target PA (PA1, PA2) is applied to an alignment filter (502-50N) that corresponds to the target PA (PA1, PA2) to adjust an aligned first signal that is output from the alignment filter (502-50N) to allow response characteristics of a radio frequency signal that is output from the target PA (PA1, PA2) to be consistent with response characteristics of a radio frequency that is output from the reference PA.

4. The MIMO PA (PA1, PA2) full-angle linearization pre-processing method according to claim 1, further comprising: in response to determining that a broadband mode is enabled:

inputting a second original signal to acquire a plurality of second signals that are output from the plurality of PAs (PA1, PA2);

executing a plurality of pre-equalization operations that correspond to the plurality of target PAs (PA1, PA2) based on the plurality of second signals to acquire a plurality of pre-equalization parameters that respectively correspond to the plurality of target PAs (PA1, PA2); and

applying the plurality of pre-equalization parameters to a plurality of pre-equalization filters (602-60N) that correspond to the plurality of target PAs (PA1, PA2) to adjust a plurality of pre-equalization signals that are respectively output from the plurality of pre-equalization filters (602-60N) and input to the plurality of target PAs (PA1, PA2) to allow frequency responses of radio frequency signals that are respectively output from the plurality of target PAs (PA1, PA2) to be consistent with a frequency response of a radio frequency signal that is output from the reference PA.

5. The MIMO PA (PA1, PA2) full-angle linearization pre-processing method according to claim 4, wherein the pre-equalization operation for a target PA (PA1, PA2) comprises:

building a Toeplitz matrix that corresponds to a target second signal by using the target second signal that corresponds to the target PA (PA1, PA2) among the plurality of second signals and then acquiring an inverse Toeplitz matrix that corresponds to the target second signal; and

acquiring a pre-equalization parameter that corresponds to the target PA (PA1, PA2) based on a reference second signal that corresponds to the reference PA among the plurality of second signals and the inverse Toeplitz matrix that corresponds to the target second signal.

6. A MIMO full-angle linearization beamforming device (10), comprising:

a plurality of power amplifiers (PAs) (PA1, PA2), corresponding to a plurality of radio frequency links (RF1, RF2, RFN);

a plurality of alignment filters (502-50N) that correspond to a plurality of target PAs (PA1, PA2) other than a reference PA among the plurality of PAs (PA1, PA2);

a plurality of pre-equalization filters (602-60N) that correspond to the plurality of target PAs (PA1, PA2);

a digital pre-distortion (DPD) circuit unit (400); and

a processor (100), configured to execute a plurality of code modules, comprising:

an alignment module (210), configured to execute an alignment operation, wherein the processor (100) is electrically connected to the plurality of alignment filters (502-50N) to apply a plurality of alignment parameter sets to the plurality of alignment filters (502-50N), and a plurality of alignment signals that are output from the plurality of alignment filters (502-50N) are input to the plurality of pre-equalization filters (602-60N) that are electrically connected with the plurality of alignment filters (502-50N);

a pre-equalization module (230), configured to execute a pre-equalization operation, wherein the processor (100) is electrically connected to the plurality of pre-equalization filters (602-60N) to apply a plurality of pre-equalization parameters to the plurality of pre-equalization filters (602-60N), and a plurality of pre-equalization signals that are output from the plurality of pre-equalization filters (602-60N) are input to the plurality of target PAs (PA1, PA2) that are electrically connected with the plurality of pre-equalization filters (602-60N); and

a DPD module (220), configured to execute a linearization operation, wherein the processor (100) is electrically connected to the DPD circuit unit (400), and a DPD signal that is output from the DPD circuit unit (400) is input to the reference PA and the plurality of alignment filters (502-50N),

wherein the processor (100) is configured to:

input a first original signal to acquire a plurality of first signals that are output from the plurality of PAs (PA1, PA2);

acquire initial non-linear characteristics of each of the plurality of PAs (PA1, PA2) based the first original signal and the plurality of first signals;

execute a plurality of alignment operations that correspond to the plurality of target PAs (PA1, PA2) other than the reference PA based on the plurality of first signals and the reference PA among the plurality of PAs (PA1, PA2) through the alignment module (210) to acquire the plurality of alignment parameter sets that respectively correspond to the plurality of target PAs (PA1, PA2);

apply the plurality of alignment parameter sets to the plurality of alignment filters (502-50N) that correspond to the plurality of target PAs (PA1, PA2);

execute the linearization operation to the reference PA through inputting the first original signal to the DPD circuit unit (400) by the DPD module (220) in order to acquire a reference DPD parameter set of the DPD circuit unit (400) that corresponds to the reference PA; and

apply the reference DPD parameter set to the DPD circuit unit (400).

7. The MIMO full-angle linearization beamforming device (10) according to claim 6, wherein the linearization operation comprises:

inputting the first original signal to the DPD circuit unit (400) to acquire a first DPD signal that is output from the DPD circuit unit (400);

inputting the first DPD signal to the reference PA to acquire a linearized first signal that corresponds to the reference PA;

adjusting a DPD parameter set of the DPD circuit unit (400), and determining whether the first original signal and the subsequent linearized first signal are compatible with a preset linearization condition; and

recognizing the latest adjusted DPD parameter set as the reference DPD parameter set, in response to determining that the first original signal and the subsequent linearized first signal are compatible with the preset linearization condition, wherein after the reference DPD parameter set is applied to the DPD circuit unit (400), response characteristics of a radio frequency signal that is output from the reference PA are linearized.

8. The MIMO full-angle linearization beamforming device (10) according to claim 6, wherein the alignment operation for a target PA (PA1, PA2) comprises:

inputting the first original signal to the DPD circuit unit (400) to execute the linearization operation to the target PA (PA1, PA2) in order to acquire a target DPD parameter set of the DPD circuit unit (400) that corresponds to the target PA (PA1, PA2);

inputting the first original signal to the reference PA in a condition where the DPD circuit unit (400) is not used to acquire a reference first signal that is output from the reference PA;

inputting the reference first signal to the DPD circuit unit (400) that has applied the target DPD parameter set to acquire an alignment reference signal output from the DPD circuit unit (400) that corresponds to the target PA (PA1, PA2); and

acquiring an alignment parameter set that corresponds to the target PA (PA1, PA2) based on the first original signal and the alignment reference signal, wherein the alignment parameter set that corresponds to the target PA (PA1, PA2) is applied to an alignment filter (502-50N) that corresponds to the target PA (PA1, PA2) to adjust an aligned first signal that is output from the alignment filter (502-50N) to allow response characteristics of a radio frequency signal that is output from the target PA (PA1, PA2) to be consistent with response characteristics of a radio frequency that is output from the reference PA.

9. The MIMO full-angle linearization beamforming device (10) according to claim 6, wherein the processor (100) is further configured to:

in response to determining that a broadband mode is enabled:

input a second original signal to acquire a plurality of second signals that are output from the plurality of PAs (PA1, PA2);

execute a plurality of pre-equalization operations that correspond to the plurality of target PAs (PA1, PA2) based on the plurality of second signals to acquire a plurality of pre-equalization parameters that respectively correspond to the plurality of target PAs (PA1, PA2); and

apply the plurality of pre-equalization parameters to the plurality of pre-equalization filters (602-60N) that correspond to the plurality of target PAs (PA1, PA2) to adjust a plurality of pre-equalization signals that are respectively output from the plurality of pre-equalization filters (602-60N) and input to the plurality of target PAs (PA1, PA2) to allow frequency responses of radio frequency signals that are respectively output from the plurality of target PAs (PA1, PA2) to be consistent with a frequency response of a radio frequency signal that is output from the reference PA.

10. The MIMO full-angle linearization beamforming device (10) according to claim 9, wherein the pre-equalization operation for a target PA (PA1, PA2) comprises:

building a Toeplitz matrix that corresponds to a target second signal by using the target second signal that corresponds to the target PA (PA1, PA2) among the plurality of second signals and then acquiring an inverse Toeplitz matrix that corresponds to the target second signal; and

acquiring a pre-equalization parameter that corresponds to the target PA (PA1, PA2) based on a reference second signal that corresponds to the reference PA among the plurality of second signals and the inverse Toeplitz matrix that corresponds to the target second signal.

**Amended claims in accordance with Rule 137(2) EPC.**

1. A multi-input multi-output, MIMO, power amplifier, PA, (PA1-PAN) full-angle linearization pre-processing method for a MIMO beamforming device (10) with a plurality of PAs (PA1-PAN) that correspond to a plurality of radio frequency links (RF1, RF2-RFN), the method comprising:
inputting a first original signal to acquire a plurality of first signals that are output from the plurality of PAs (PA1-PAN);
**characterized in** further comprising:

acquiring initial non-linear characteristics of each of the plurality of PAs (PA1-PAN) based on the first original signal and the plurality of first signals;

executing a plurality of alignment operations that correspond to a plurality of target PAs (PA2-PAN) other than a reference PA (PA1) based on the plurality of first signals and the reference PA (PA1) among the plurality of PAs (PA2-PAN) to acquire a plurality of alignment parameter sets that respectively correspond to the plurality of target PAs (PA2-PAN);

applying the plurality of alignment parameter sets to a plurality of alignment filters (502-50N) that correspond to the plurality of target PAs (PA2-PAN);

executing a linearization operation to the reference PA (PA1) through inputting the first original signal to a digital pre-distortion, DPD, circuit unit (400) in order to acquire a reference DPD parameter set of the DPD circuit unit (400) that corresponds to the reference PA (PA1); and

applying the reference DPD parameter set to the DPD circuit unit (400).

2. The MIMO PA (PA1-PAN) full-angle linearization pre-processing method according to claim 1, wherein the linearization operation comprises:

inputting the first original signal to the DPD circuit unit (400) to acquire a first DPD signal that is output from the DPD circuit unit (400);

inputting the first DPD signal to the reference PA (PA1) to acquire a linearized first signal that corresponds to the reference PA (PA1);

adjusting a DPD parameter set of the DPD circuit unit (400) and determining whether the first original signal and the subsequent linearized first signal are compatible with a preset linearization condition; and

recognizing the latest adjusted DPD parameter set as the reference DPD parameter set, in response to determining that the first original signal and the subsequent linearized first signal are compatible with the preset linearization condition, wherein after the reference DPD parameter set is applied to the DPD circuit unit (400), response characteristics of a radio frequency signal that is output from the reference PA (PA1) are linearized.

3. The MIMO PA (PA1-PAN) full-angle linearization pre-processing method according to claim 1, wherein the alignment operation for a target PA (PA2-PAN) comprises:

inputting the first original signal to the DPD circuit unit (400) to execute the linearization operation to the target PA (PA2-PAN) in order to acquire a target DPD parameter set of the DPD circuit unit (400) that corresponds to the target PA (PA2-PAN);

inputting the first original signal to the reference PA (PA1) in a condition where the DPD circuit unit (400) is not used to acquire a reference first signal that is output from the reference PA (PA1);

inputting the reference first signal to the DPD circuit unit (400) that has applied the target DPD parameter set to acquire an alignment reference signal output from the DPD circuit unit (400) that corresponds to the target PA (PA2-PAN); and

acquiring an alignment parameter set that corresponds to the target PA (PA2-PAN) based on the first original signal and the alignment reference signal, wherein the alignment parameter set that corresponds to the target PA (PA2-PAN) is applied to an alignment filter (502-50N) that corresponds to the target PA (PA2-PAN) to adjust an aligned first signal that is output from the alignment filter (502-50N) to allow response characteristics of a radio frequency signal that is output from the target PA (PA2-PAN) to be consistent with response characteristics of a radio frequency that is output from the reference PA (PA1).

4. The MIMO PA (PA1-PAN) full-angle linearization pre-processing method according to claim 1, further comprising: in response to determining that a broadband mode is enabled:

inputting a second original signal to acquire a plurality of second signals that are output from the plurality of PAs (PA1-PAN);

executing a plurality of pre-equalization operations that correspond to the plurality of target PAs (PA2-PAN) based on the plurality of second signals to acquire a plurality of pre-equalization parameters that respectively correspond to the plurality of target PAs (PA2-PAN); and

applying the plurality of pre-equalization parameters to a plurality of pre-equalization filters (602-60N) that correspond to the plurality of target PAs (PA2-PAN) to adjust a plurality of pre-equalization signals that are respectively output from the plurality of pre-equalization filters (602-60N) and input to the plurality of target PAs (PA2-PAN) to allow frequency responses of radio frequency signals that are respectively output from the plurality of target PAs (PA2-PAN) to be consistent with a frequency response of a radio frequency signal that is output from the reference PA (PA1).

5. The MIMO PA (PA1-PAN) full-angle linearization pre-processing method according to claim 4, wherein the pre-equalization operation for a target PA (PA2-PAN) comprises:

building a Toeplitz matrix that corresponds to a target second signal by using the target second signal that corresponds to the target PA (PA2-PAN) among the plurality of second signals and then acquiring an inverse Toeplitz matrix that corresponds to the target second signal; and

acquiring a pre-equalization parameter that corresponds to the target PA (PA2-PAN) based on a reference second signal that corresponds to the reference PA (PA1) among the plurality of second signals and the inverse Toeplitz matrix that corresponds to the target second signal.

6. A MIMO full-angle linearization beamforming device (10), comprising:

a plurality of power amplifiers, PAs, (PA1-PAN), corresponding to a plurality of radio frequency links (RF1, RF2-RFN);

a plurality of alignment filters (502-50N) that correspond to a plurality of target PAs (PA2-PAN) other than a reference PA (PA1) among the plurality of PAs (PA1-PAN);

a plurality of pre-equalization filters (602-60N) that correspond to the plurality of target PAs (PA2-PAN);

a digital pre-distortion, DPD, circuit unit (400); and

a processor (100), configured to execute a plurality of code modules, comprising:

an alignment module (210), configured to execute an alignment operation, wherein the processor (100) is electrically connected to the plurality of alignment filters (502-50N) to apply a plurality of alignment parameter sets to the plurality of alignment filters (502-50N), and a plurality of alignment signals that are output from the plurality of alignment filters (502-50N) are input to the plurality of pre-equalization filters (602-60N) that are electrically connected with the plurality of alignment filters (502-50N);

a pre-equalization module (230), configured to execute a pre-equalization operation, wherein the processor (100) is electrically connected to the plurality of pre-equalization filters (602-60N) to apply a plurality of pre-equalization parameters to the plurality of pre-equalization filters (602-60N), and a plurality of pre-equalization signals that are output from the plurality of pre-equalization filters (602-60N) are input to the plurality of target PAs (PA2-PAN) that are electrically connected with the plurality of pre-equalization filters (602-60N); and

a DPD module (220), configured to execute a linearization operation, wherein the processor (100) is electrically connected to the DPD circuit unit (400), and a DPD signal that is output from the DPD circuit unit (400) is input to the reference PA (PA1) and the plurality of alignment filters (502-50N),
wherein the processor (100) is configured to:

input a first original signal to acquire a plurality of first signals that are output from the plurality of PAs (PA1-PAN);
**characterized in that** the processor (100) is further configured to:

acquire initial non-linear characteristics of each of the plurality of PAs (PA1, PA2) based on the first original signal and the plurality of first signals;
execute a plurality of alignment operations that correspond to the plurality of target PAs (PA1, PA2) other than the reference PA (PA1) based on the plurality of first signals and the reference PA (PA1) among the plurality of PAs (PA1-PAN) through the alignment module (210) to acquire the plurality of alignment parameter sets that respectively correspond to the plurality of target PAs (PA2-PAN);
apply the plurality of alignment parameter sets to the plurality of alignment filters (502-50N) that correspond to the plurality of target PAs (PA2-PAN);
execute the linearization operation to the reference PA through inputting the first original signal to the DPD circuit unit (400) by the DPD module (220) in order to acquire a reference DPD parameter set of the DPD circuit unit (400) that corresponds to the reference PA (PA1); and
apply the reference DPD parameter set to the DPD circuit unit (400).

7. The MIMO full-angle linearization beamforming device (10) according to claim 6, wherein the linearization operation comprises:

inputting the first original signal to the DPD circuit unit (400) to acquire a first DPD signal that is output from the DPD circuit unit (400);
inputting the first DPD signal to the reference PA (PA1) to acquire a linearized first signal that corresponds to the reference PA (PA1);
adjusting a DPD parameter set of the DPD circuit unit (400), and determining whether the first original signal and the subsequent linearized first signal are compatible with a preset linearization condition; and
recognizing the latest adjusted DPD parameter set as the reference DPD parameter set, in response to determining that the first original signal and the subsequent linearized first signal are compatible with the preset linearization condition, wherein after the reference DPD parameter set is applied to the DPD circuit unit (400), response characteristics of a radio frequency signal that is output from the reference PA are linearized.

8. The MIMO full-angle linearization beamforming device (10) according to claim 6, wherein the alignment operation for a target PA (PA2-PAN) comprises:

inputting the first original signal to the DPD circuit unit (400) to execute the linearization operation to the target PA (PA2-PAN) in order to acquire a target DPD parameter set of the DPD circuit unit (400) that corresponds to the target PA (PA2-PAN);
inputting the first original signal to the reference PA (PA1) in a condition where the DPD circuit unit (400) is not used to acquire a reference first signal that is output from the reference PA (PA1);
inputting the reference first signal to the DPD circuit unit (400) that has applied the target DPD parameter set to acquire an alignment reference signal output from the DPD circuit unit (400) that corresponds to the target PA (PA2-PAN); and
acquiring an alignment parameter set that corresponds to the target PA (PA2-PAN) based on the first original signal and the alignment reference signal, wherein the alignment parameter set that corresponds to the target PA (PA2-PAN) is applied to an alignment filter (502-50N) that corresponds to the target PA (PA2-PAN) to adjust an aligned first signal that is output from the alignment filter (502-50N) to allow response characteristics of a radio frequency signal that is output from the target PA (PA2-PAN) to be consistent with response characteristics of a radio frequency that is output from the reference PA (PA1).

9. The MIMO full-angle linearization beamforming device (10) according to claim 6, wherein the processor (100) is further configured to:
in response to determining that a broadband mode is enabled:

input a second original signal to acquire a plurality of second signals that are output from the plurality of PAs (PA1-PAN);

execute a plurality of pre-equalization operations that correspond to the plurality of target PAs (PA2-PAN) based on the plurality of second signals to acquire a plurality of pre-equalization parameters that respectively correspond to the plurality of target PAs (PA2-PAN); and

apply the plurality of pre-equalization parameters to the plurality of pre-equalization filters (602-60N) that correspond to the plurality of target PAs (PA2-PAN) to adjust a plurality of pre-equalization signals that are respectively output from the plurality of pre-equalization filters (602-60N) and input to the plurality of target PAs (PA2-PAN) to allow frequency responses of radio frequency signals that are respectively output from the plurality of target PAs (PA2-PAN) to be consistent with a frequency response of a radio frequency signal that is output from the reference PA (PA1).

10. The MIMO full-angle linearization beamforming device (10) according to claim 9, wherein the pre-equalization operation for a target PA (PA2-PAN) comprises:

building a Toeplitz matrix that corresponds to a target second signal by using the target second signal that corresponds to the target PA (PA2-PAN) among the plurality of second signals and then acquiring an inverse Toeplitz matrix that corresponds to the target second signal; and

acquiring a pre-equalization parameter that corresponds to the target PA (PA2-PAN) based on a reference second signal that corresponds to the reference PA (PA1) among the plurality of second signals and the inverse Toeplitz matrix that corresponds to the target second signal.

FIG. 1A

FIG. 1B

200

210

Alignment Module

220

Digital Pre-Distortion (DPD)
Module

230

Pre-Equalization Module

240

Database

# FIG. 2

Input a first original signal to acquire multiple first signals that are output from multiple PA — S310

Acquire initial non-linear characteristics of each of the multiple PA based on the first original signal and the multiple first signals — S320

Execute multiple alignment operations that correspond to multiple target PA other than a reference PA based on the multiple first signals and the reference PA among the multiple PA to acquire multiple alignment parameter sets that respectively correspond to the multiple target PA — S330

Apply the multiple alignment parameter sets to multiple alignment filters that correspond to the multiple target PA — S340

Execute a linearization operation to the reference PA through inputting the first original signal to a digital pre-distortion (DPD) circuit unit in order to acquire a reference DPD parameter set of the DPD circuit unit that corresponds to the reference PA — S350

Apply the reference DPD parameter set to the DPD circuit unit — S360

# FIG. 3A

Input a first original signal to acquire multiple first signals that are output from multiple PA — S310

Acquire initial non-linear characteristics of each of the multiple PA based on the first original signal and the multiple first signals — S320

Execute multiple alignment operations that correspond to multiple target PA other than a reference PA based on the multiple first signals and the reference PA among the multiple PA to acquire multiple alignment parameter sets that respectively correspond to the multiple target PA — S330

Apply the multiple alignment parameter sets to multiple alignment filters that correspond to the multiple target PA — S340

Execute a linearization operation to the reference PA through inputting the first original signal to a digital pre-distortion (DPD) circuit unit in order to acquire a reference DPD parameter set of the DPD circuit unit that corresponds to the reference PA — S350

Apply the reference DPD parameter set to the DPD circuit unit — S360

Input a second original signal to acquire multiple second signals that are output from the multiple PA — S370

Execute multiple pre-equalization operations that correspond to the multiple target PA based on the multiple second signals to acquire multiple pre-equalization parameters that respectively correspond to the multiple target PA — S380

Apply the multiple pre-equalization parameters to multiple pre-equalization filters that correspond to the multiple target PA to adjust multiple pre-equalization signals that are respectively output from the multiple pre-equalization filters and input to the multiple target PA to allow frequency responses of radio frequency signals that are respectively output from the multiple target PA to be consistent with a frequency response of a radio frequency signal that is output from the reference PA — S390

# FIG. 3B

FIG. 4

Reference PA with non-linear characteristics

FIG. 5A

Target PA with non-linear characteristics

FIG. 5B

**A radio frequency signal output from a reference PA after
a reference DPD parameter set is applied to a DPD circuit unit**

FIG. 6

**A radio frequency signal output from a target PA after a reference DPD parameter set is applied to a DPD circuit unit**

## FIG. 7A

**After the reference DPD parameter set is applied to a DPD circuit unit, and an alignment parameter set is applied to an alignment filter**

## FIG. 7B

A radio frequency signal output from a reference PA
combines with a radio frequency signal output from a
target PA (without pre-equalization)

FIG. 8A

The radio frequency signal output from the reference PA
combines with the radio frequency signal output from the
target PA (with pre-equalization)

FIG. 8B

**EUROPEAN SEARCH REPORT**

Application Number

EP 24 21 0608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU CHAO ET AL: "Full-Angle Digital Predistortion of 5G Millimeter-Wave Massive MIMO Transmitters", IEEE TRANSACTIONS ON MICROWAVE THEORY AND TECHNIQUES, IEEE, USA, vol. 67, no. 7, 1 July 2019 (2019-07-01), pages 2847-2860, XP011732533, ISSN: 0018-9480, DOI: 10.1109/TMTT.2019.2918450 [retrieved on 2019-06-28] | 1-3,6-8 | INV. H04B1/04 H04B7/06 |
| A | * abstract * <br> * sections I-III * <br> * figures 1-11 * | 4,5,9,10 | |
| X | US 2023/344477 A1 (KOVACIC STEPHEN JOSEPH [US] ET AL) 26 October 2023 (2023-10-26) | 1-3,6-8 | |
| A | * paragraph [0062] - paragraph [0064] * <br> * paragraph [0103] - paragraph [0255] * <br> * figures 1-11 * | 4,5,9,10 | |
| X | LI CAOYU ET AL: "Analog Predistorter Averaged Digital Predistortion for Power Amplifiers in Hybrid Beam-Forming Multi-Input Multi-Output Transmitter", IEEE ACCESS, IEEE, USA, vol. 8, 1 August 2020 (2020-08-01), pages 146145-146153, XP011805648, DOI: 10.1109/ACCESS.2020.3013965 [retrieved on 2020-08-17] | 1-3,6-8 | TECHNICAL FIELDS SEARCHED (IPC) <br><br> H04B |
| A | * abstract * <br> * sections I, II * <br> * figures 1-4 * | 4,5,9,10 | |

The present search report has been drawn up for all claims

| Place of search | Date of completion of the search | Examiner |
|---|---|---|
| Munich | 26 March 2025 | Patrovsky, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 0608

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2025

| Patent document cited in search report | Publication date | Patent family member(s) | Publication date |
|---|---|---|---|
| US 2023344477 A1 | 26-10-2023 | NONE | |

For more details about this annex : see Official Journal of the European Patent Office, No. 12/82

EPO FORM P0459